# EUROPEAN PATENT SPECIFICATION

(11) **EP 2 971 791 B1**
(45) Date of publication and mention of the grant of the patent: **21.07.2021**
(21) Application number: 14711196.7
(22) Date of filing: 13.03.2014
(51) Int. Cl.: F04D 29/36, F01P 7/06, F16C 1/10, F16C 1/16

(54) **A VARIABLE PITCH FAN AND A METHOD FOR VARYING THE BLADE PITCH IN A FAN**
VENTILATOR MIT EINSTELLBAREN SCHAUFELN SOWIE VERFAHREN ZUR EINSTELLUNG DER SCHAUFELN EINES VENTILATORS
VENTILATEUR À PAS VARIABLE ET MÉTHODE DE VARIATION DU PAS DES PALES D'UN VENTILATEUR

(30) Priority: 13.03.2013 IT MO20130065
(43) Date of publication of application: 20.01.2016
(73) Proprietor: CNH Industrial Italia S.p.A., 10135 Torino (IT)
(72) Inventor: BENEVELLI, Alessandro, I-42020 Albinea (RE) (IT); MAGRINI, Sergio, I-41100 Modena (IT); MORSELLI, Riccardo, I-41057 San Vito Di Spilamberto Modena (IT)
(74) Representative: CNH Industrial IP Department
(86) International application number: PCT/EP2014/054917
(87) International publication number: WO 2014/140149

(56) References cited:
- EP-A2- 0 967 104
- WO-A1-2012/106790
- BR-U2- MU8 900 519
- DE-A1- 10 326 124
- GB-A- 981 989
- US-A- 1 712 883
- US-A- 3 177 949
- None

## Description

### Field of the invention

The invention relates to a variable pitch fan, which may be used in cooling systems, for example for cooling an engine, particularly an engine of an agricultural or industrial machine, such as a tractor. More in general, the variable pitch fan according to the invention may be used to control an air flow, for example in a seeder to blow seeds from a storing tank towards a seeding unit.

### Background of the invention

Known tractors comprise a suction fan for sucking air from the external environment and directing the air towards the engine so as to cool the latter during operation. The fan comprises a rotatable housing supporting a plurality of blades. Each blade can be rotated around a respective axis so as so vary the blade pitch. By varying the blade pitch, the flow rate of air sucked by the fan can be adjusted according to the engine temperature.

In known tractors, the pitch of the blades can be varied by means of adjusting devices that are actuated by a hydraulic or pneumatic fluid. Examples of such adjusting devices are disclosed in US 6109871, US 6644922, US 6942458, US 7229250.

However, using a hydraulic or pneumatic fluid for actuating the adjusting device makes the fan quite complicated and hence expensive, particularly due to the risks of leakage of the hydraulic or pneumatic fluid. For example, in hydraulic systems it is necessary to use rotating sealing elements which need to be replaced quite often since they tend to wear rapidly. Similar drawbacks occur in connection with pneumatic systems.

EP 0 967 104 A2 discloses an apparatus where the blades are rotatable about their respective longitudinal axis upon actuation of drive and transmission means for the movement. DE10326124 discloses a plurality of discrete bodies configured to move linearly relative to a fixed tubular guide.

An object of the invention is to improve the variable pitch fans.

A further object is to provide a variable pitch fan having a structure which is less complicated than known fans.

Another object is to provide a variable pitch fan which is not excessively expensive to be manufactured and assembled.

A further object is to provide a method for varying the pitch of the blades in a fan, which is simple to be carried out.

### Summary of the invention

In a first aspect of the invention, there is provided a variable pitch fan according to claim 1.

Since the driven element is actuated by a mechanical driving element, there is no need to use a hydraulic or pneumatic fluid to move the driven element. Hence, the structure of the variable pitch fan can be significantly simplified. For example, there is no need to use complicated sealing systems to avoid leakage of the hydraulic or pneumatic fluid during operation of the fan.

Consequently, also the costs for manufacturing and assembling the variable pitch fan are reduced.

According to the invention, the mechanical driving element comprises a rack and the driven element comprises a rotatable element having a toothed portion, particularly a pinion.

This configuration provides a particularly simple and reliable way to rotate each blade around the respective tilt axis.

According to the invention, the adjusting device comprises a transmission device for transmitting the linear motion to the mechanical driving element.

The transmission device is interposed between an actuator and the mechanical driving element.

According to the invention, the transmission device comprises a plurality of discrete bodies, particularly rolling bodies such as spheres or rollers, arranged inside a guide interposed between the actuator and the mechanical driving element.

The discrete bodies are disconnected one from another.

A thrust element may be associated to the actuator, the thrust element being displaceable by the actuator for pushing the discrete bodies of said plurality towards the mechanical driving element, so as to linearly displace the mechanical driving element.

In an embodiment, the transmission device is configured to transmit the linear motion along a path comprising an output portion extending coaxially with the rotation axis and an input portion arranged at an angle, in particular perpendicularly, to the rotation axis.

The guide inside which the discrete bodies of said plurality are movable may extend along the path of the transmission device.

The discrete bodies, particularly spheres or rollers, allow the linear motion to be transmitted along any desired path from the actuator to the mechanical driving element.

In particular, the path may exhibit a relatively small curvature radius. In such a case, transmitting the linear motion by means of other transmission systems could be much more complicated.

The discrete bodies housed inside the guide are particularly simple to be assembled, do not require complicated maintenance operations and do not involve excessive costs.

In an embodiment, the actuator can displace the mechanical driving element in a first direction such as to increase the pitch of the blades.

The mechanical driving element is also displaceable in a second direction opposite the first direction. It is thus possible to decrease the pitch of the blades or even to reverse the flow of air through the variable pitch fan.

In other words, the variable pitch fan can be used both to suck air from the external environment, for example in order to cool the engine, or to blow air towards the external environment, for example towards the mechanical parts of the vehicle in order to clean them from dust, leaves or other dirties.

### Brief description of the drawings

The invention can be better understood and carried out with reference to the attached drawings, which show an exemplificative and non limiting embodiment thereof, in which:
Figure 1 is a front view of a variable pitch fan;
Figure 2 is a cross-section taken along plane II-II in Figure 1;
Figure 3 is a cross-section taken along a plane perpendicular to plane II-II in Figure 1;
Figure 4 is an enlarged perspective view, showing a blade and a portion of an adjusting device for rotating the blade around a tilt axis;
Figure 5 is an enlarged perspective view, showing a supporting element provided with anti-rotation means;
Figure 6 is a front view showing a manual element for acting on the adjusting device;
Figure 7 is a flow chart showing a control procedure for controlling calibration of a sensor capable of detecting the position of the adjusting device;
Figure 8 is a flow chart like Figure 7, showing a control procedure according to an alternative embodiment;
Figure 9 is a flow chart like Figure 7, showing a control procedure according to another alternative embodiment;
Figure 10 is a flow chart showing the steps of a procedure for calibrating the sensor.

### Detailed description of the preferred embodiments

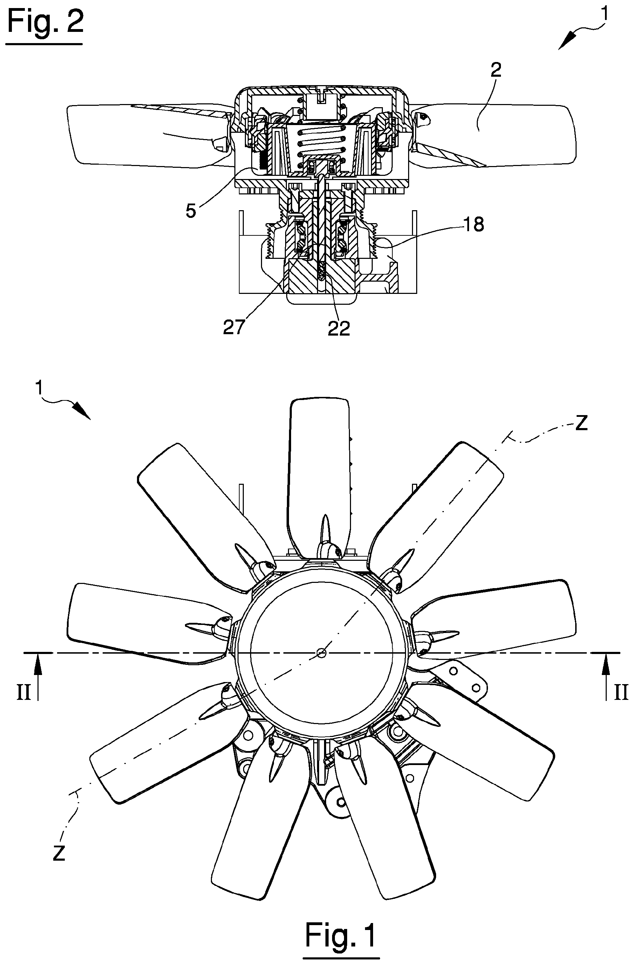

Figures 1 to 3 show a variable pitch fan 1 that can be used for several purposes when there is the need to control a flow of air. The fan 1 can be used as a cooling fan, for example for cooling an engine, particularly an engine of a vehicle such as an agricultural vehicle or an industrial vehicle. The fan 1 is particularly suitable for cooling the engine of a tractor.

However, the fan 1 could be used also for cooling other components, for example an electric motor.

As an alternative, the fan 1 could be used for non-cooling purposes, in particular in a seeder to blow the seeds from a storing tank towards a seeding unit.

If the fan 1 is used to cool an engine, the fan 1 is designed to suck fresh air from the external environment and to direct the air towards a liquid cooler or radiator. The latter serves for keeping below a threshold limit the temperature of a liquid intended to cool the engine.

The fan 1 comprises a plurality of blades 2 supported by a supporting device 3. The blades 2 may be uniformly spaced apart one from another along a peripheral region of the supporting device 3.

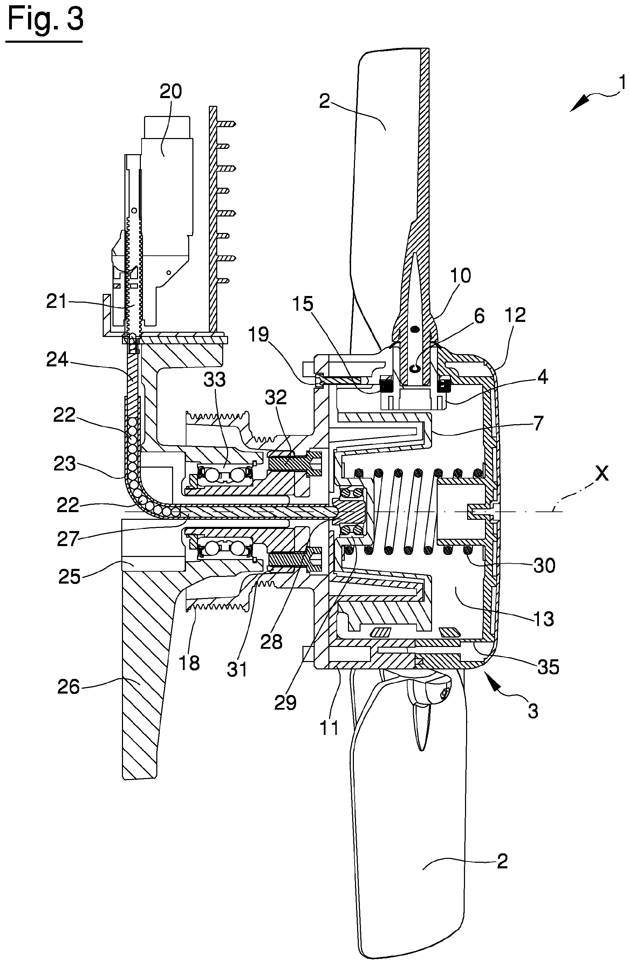

A rotation device is provided for rotating the supporting device 3 around a rotation axis X, shown in Figure 3. When the supporting device 3 rotates around the rotation axis X, also the blades 2 supported by the supporting device 3 rotate around the same axis.

In addition, each blade 2 can be rotated around a respective tilt axis Z by an adjusting device that will be described in detail herebelow. The tilt axis Z of each blade 2 can be a longitudinal axis of the blade 2, i.e. an axis along which the blade 2 mainly extends.

Each tilt axis Z may be perpendicular to the rotation axis X.

In particular, the blades 2 can be rotated in a synchronized manner around the respective tilt axes Z.

By rotating each blade 2 around the respective tilt axis Z, it is possible to vary the pitch of the blades, i.e. the angle formed between each blade 2 and its speed vector. The speed vector of a blade 2 is the vector representing the speed of a blade 2 when the latter is rotated around the rotation axis X by the supporting device 3.

By varying the pitch of the blades, the flow rate of air sucked by the fan 1 is varied. It is thus possible to change the quantity of air that is sucked by the fan 1, according to the engine speed and hence according to the engine temperature.

The adjusting device which allows the pitch of the blades to be varied comprises, for each blade 2, a driven element fixed relative to the blade 2. The driven element may comprise a rotatable element having at least a portion of toothed surface. In particular, each driven element is rotatable around the tilt axis Z of the corresponding blade 2.

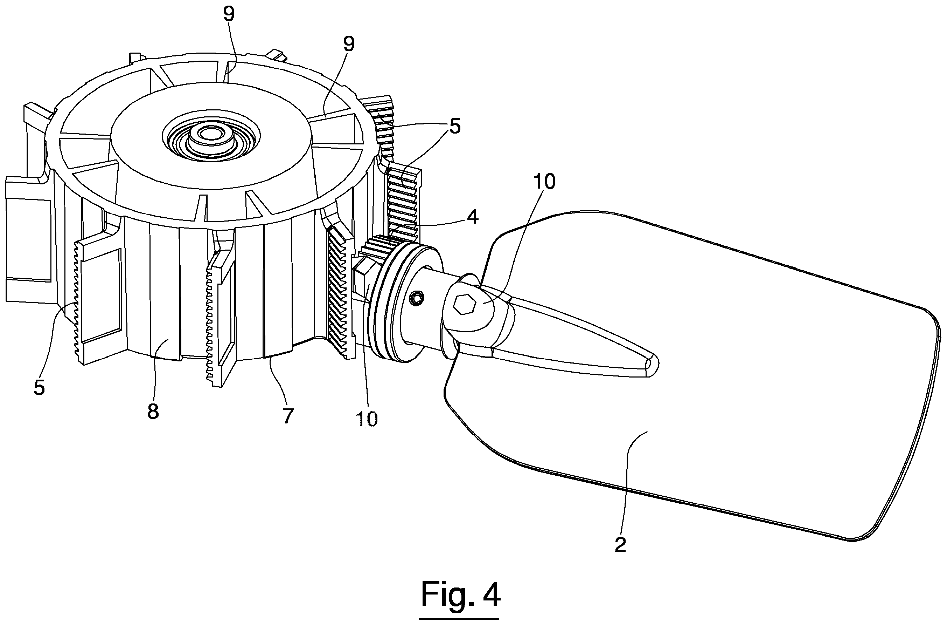

In the example shown in the Figures, the driven element comprises a pinion 4, which may be toothed only in a portion of its external surface. For a predetermined blade 2, the pinion 4 can be seen in Figure 4.

The driven element, particularly the pinion 4, may be fixed to the corresponding blade 2 by means of a fixing element such as an elastic pin 6, shown in Figure 3.

The driven element or pinion 4 is rotated about the corresponding tilt axis Z by a mechanical driving element which comprises a rack 5. The rack 5 may extend along a direction parallel to the rotation axis X.

In an alternative embodiment, the rack 5 may also extend along a direction which is slightly inclined relative to the rotation axis X.

The rack 5 is fixed relative to a control element 7, which is shown in detail in Figure 4.

The control element 7 may comprise a central body 8, which may be hollow, extending around the rotation axis X. From a side surface of the central body 8 a plurality of racks 5 protrude towards the outside. The racks 5 can be uniformly spaced from one another. Each rack 5 can run along the central body 8 parallelly to the rotation axis X.

Between two consecutive racks 5 a space is defined, suitable for receiving a pinion 4 engaging with the corresponding rack 5.

A plurality of ribs 9 project, for example radially, towards the inside of the central body 8 from the side surface thereof. The function of the ribs 9 will be explained more in detail below.

By moving the control element 7 in a direction parallel to the rotation axis X, all the racks 5 are displaced simultaneously by the same amount. Consequently, the racks 5 synchronously drive the pinions 4. The blades 2 can therefore be rotated around the respective tilt axes Z in a coordinated manner.

The supporting device 3 comprises a housing 13, for example defined by assembling a base shell 11, a closure shell 35 and a cover 12.

The base shell 11, the closure shell 35 and the cover 12 may be made of polymeric material. The base shell 11 and the closure shell 35 may be provided with stiffening ribs. The cover 12, which is attached to the closure shell 35, serves in this case for dampening vibrations.

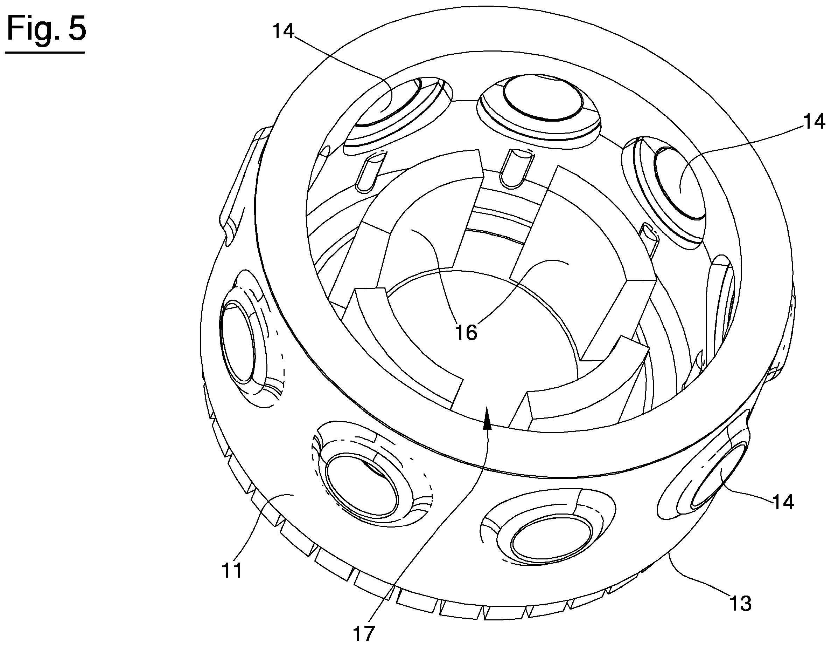

Inside the housing 13, the control element 7 and the pinions 4 are received. The housing 13 is provided with a plurality of holes 14, shown in Figure 5, arranged for example radially around the rotation axis X. A stem of each blade 2 passes through a corresponding hole 14, so that the blade 2 protrudes outside the housing 13, whereas the pinion 4 is received inside the housing 13.

An axial bearing 15, shown in Figure 3, is interposed between each pinion 4 and the housing 13, so as to support the corresponding blade 2 and decrease friction which is generated as the blade 2 is rotated.

Each blade 2 may be provided with one or more balancing masses 10 so as to balance the centrifugal forces acting on the blade 2 during rotation. The balancing masses 10 can be fixed to the blades 2 outside the housing 13. In the alternative or in addition, the balancing masses 10 can be provided inside the housing 13, for example fixed to the pinions 4, as shown in Figure 4. In the example of Figure 4, the balancing masses 10 are associated to the blades 2 outside and inside the housing 13.

The rotation device which rotates the supporting element 3 around the rotation axis X may comprise a pulley 18 which can be rotated around the rotation axis X by a belt that is not shown. The belt can be driven for example by a further pulley connected to an engine shaft.

The pulley 18 is fixed relative to the housing 13. For example, the pulley 18 can be fastened to the base shell 11 by means of removable fastening elements 19, such as screws. The fastening elements 19 may pass through holes obtained in a flange of the pulley 18.

The control element 7 is prevented from rotating relative to the housing 13 by anti-rotation means that will be described in detail herebelow.

A plurality of protrusions 16, shown in Figure 5, project inside the housing 13 from the base shell 11 towards the closure shell 35. The protrusions 16 may be shaped as circular arcs distributed around the rotation axis X. Between two consecutive protrusions 16 a gap 17 is defined.

When the control element 7 is received inside the housing 13, two consecutive ribs 9 of the control element 7 are received in a gap 17 of the housing 13. In particular, a rib 9 abuts against a protrusion 16 defining the gap 17 at a side thereof, whereas an adjacent rib 9 abuts against another protrusion 16 defining the same gap 17 at the other side thereof. Relative rotation between the housing 13 and the control element 7 is thus avoided.

Hence, the protrusions 16 of the housing 13 and the ribs 9 of the control element 7 act as anti-rotation means for preventing a relative rotation between the supporting device 3 and the control element 7. The anti-rotation means thus keep the pinions 4 and the racks 5 in a correct relative position in a circumferential direction with respect to the rotation axis X.

On the other hand, the control element 7 is free to translate relative to the housing 13 in a direction parallel to the rotation axis X. To this end, a transmission device is provided for transmitting a linear motion to the control element 7.

The transmission device is interposed between an actuator 20 and the control element 7. The actuator 20, which can be an electric actuator, generates a linear motion, for example by coupling a rotatable shaft of the actuator 20 to a worm gear 21. The linear motion is then transmitted to the control element 7 by the transmission device via a transmission path. The transmission path may comprise an output portion which is coaxial with the rotation axis X, in particular arranged along the rotation axis X. Upstream of the output portion, an input portion of the transmission path may be provided, which is arranged at an angle to the rotation axis X, in particular perpendicularly to the rotation axis X. This arrangement of the transmission path allows the actuator 20 to be positioned at a side of the rotation axis X.

In an embodiment which is not shown, the input portion arranged at an angle to the rotation axis X may be omitted, and the transmission path may be fully coaxial with the rotation axis X.

The transmission device comprises a plurality of discrete bodies, in particular rolling bodies arranged along the transmission path. In the embodiment shown in the Figures, the discrete bodies are shaped as spheres 22. However, the discrete bodies may have also different shapes, for example rollers.

The spheres 22 or other discrete bodies are contained inside a guide, particularly configured as a tubular guide 23, which is arranged along the transmission path. In the example shown in the Figures, the tubular guide 23 has approximately an "L" shape.

A thrust element is interposed between the actuator 20 and the spheres 22 for pushing the spheres 22 towards the control element 7. The thrust element may be configured as a pin 24 having an end arranged inside the tubular guide 23 and acting on the spheres 22. A further end of the pin 24 may be connected to the worm gear 21. The pin 24, in addition to transmitting the linear motion from the worm gear 21 to the spheres 22, serves also to prevent the spheres 22 from exiting out of the tubular guide 23.

The tubular guide 23 is arranged in a stationary position on the vehicle.

In particular, the tubular guide 23 may be supported by a hub 25, having a central hole coaxial with the rotation axis X through which a horizontal portion of the tubular guide 23 passes. The hub 25 is arranged in a stationary position on the vehicle, for example because it is fixed to a support element 26 intended to be fastened to the engine.

The support element 26 further supports the actuator 20.

A shaft 27 is partially housed inside the tubular guide 23, at an end of the tubular guide 23 opposite the end which houses the pin 24. The shaft 27, together with the pin 24, allows the spheres 22 to remain contained inside the tubular guide 23.

The shaft 27 has a tip which protrudes from the tubular guide 23 and engages with an end element 28. The latter is received in a recess obtained in the control element 7.

Between the end element 28 and the control element 7, a bearing 29 is interposed. The bearing 29 allows the control element 7 to rotate relative to the end element 28 when the housing 13 is rotated by the pulley 18.

An elastic element, particularly a spring 30, is received inside the housing 13 so as to be interposed between the housing 13, particularly the closure shell 35 thereof, and the control element 7. The spring 30 is configured to push the control element 7 away from the closure shell 35. The spring 30 may have an end region located around the recess of the control element 7 inside which the bearing 29 and the end element 28 are received.

The pulley 18 is further fastened to an intermediate hub 31 by means of fastening members, such as fastening screws 32. The intermediate hub 31 is rotatingly supported by the support element 26. In particular, a bearing element 33 may be interposed between the intermediate hub 31 and the support element 26 to allow the intermediate hub 31 to rotate relative to the support element 26.

The intermediate hub 31 has a central passage through which the hub 25, the tubular guide 23 and the shaft 27 pass. A predefined clearance is provided between the hub 25 and the central passage of the intermediate hub 31, so that the intermediate hub 31 may rotate relative to the hub 25.

In operation, the pulley 18 is rotated around the rotation axis X and in turn rotatingly drives the housing 13, to which it is fastened by the screws 19. Since the blades 2 are supported by the housing 13, the blades 2 rotate together with the pulley 18 around the rotation axis X. Air can thus be sucked from the external environment by the fan 1, so as to cool the engine.

When it is desired to vary the pitch of the blades, the actuator 20 causes the worm gear 21 to be linearly displaced, for example towards the tubular guide 23. The pin 24, pushed by the worm gear 21, penetrates more deeply inside the tubular guide 23. The spheres 22 are thus pushed towards the housing 13.

The spheres 22 convert the linear motion of the pin 24 from an input direction, which in the example shown is vertical, to an output direction, which in the example shown is horizontal. More in general, the discrete bodies or spheres 22 convert the direction of the linear motion generated by the actuator 20 from the direction in which the pin 24 extends to the direction in which the shaft 27 extends. The spheres 22 thus displace the shaft 27 towards the housing 13 along the rotation axis X.

The shaft 27 in turn displaces the end element 28, which acts on the control element 7 and pushes the latter towards the closure shell 35 of the housing 13. The control element 7 is thus moved along the rotation axis X against the action of the spring 30, which in the example shown is further compressed between the control element 7 and the closure shell 35 of the housing 13. The control element 7 moves inside the housing 13, whose position along the rotation axis X does not change.

Since the racks 5 are obtained on the control element 7, by displacing the control element 7 along the rotation axis X, also the racks 5 are displaced in the same direction along a rectilinear stroke. The racks 5 cause the pinions 4 to rotate around the respective tilt axes Z by an angle which depends on the extent of linear displacement of the racks 5. Consequently, each blade 2 is rotated around the corresponding tilt axis Z, which causes the pitch of the blades to be varied, e.g. increased.

If it is desired to vary the pitch of the blades in the other direction, for example by decreasing it, an opposite sequence of movements is followed.

The actuator 20 is rotated in a direction such as to cause the worm gear 21 to re-enter into a casing of the actuator 20.

The spring 30 pushes the control element 7 towards the base shell 11 of the housing 13 and towards the pulley 18, i.e. towards the left in the example of Figure 3. The end element 28 and the shaft 27 are thus displaced backwards along the rotation axis X together with the control element 7. The shaft 27 acts on the spheres 22, which cause the pin 24 to at least partially exit from the tubular guide 23 and follow the worm gear 21.

Since the control element 7 is pushed towards the base shell 11 of the housing 13 by the spring 30, the racks 5 linearly move in the same direction and cause the pinions 4 to rotate in a direction opposite the direction in which the pinions 4 rotated when the pin 24 was caused to penetrate more deeply inside the tubular guide 23. The pitch of the blades is thus varied in a manner opposite to what has been disclosed before. For example, if the pitch of the blades was increased by causing the pin 24 to penetrate more deeply inside the tubular guide 23, the pitch of the blades is now decreased.

It is stressed that it is not necessary to stop the pulley 18 when it is desired to vary the pitch of the blades. In other words, the pitch of the blades may be varied also when the fan 1 is working, i.e. when the supporting device 3 and the blades 2 are being rotated around the rotation axis X. The adjusting device comprising the racks 5 and the pinions 4 is indeed configured to work also while the blades 2 are rotated around the rotation axis X by the pulley 18.

It is clear from the above that the coupling between the driven elements or pinions 4 and the mechanical driving elements or racks 5 provides a simple and effective manner to vary the pitch of the blades.

In particular, it is no longer necessary to use hydraulic or pneumatic fluids and the system which varies the pitch of the blades can be entirely mechanical. Thus, there is no need to use expensive rotatable sealing elements or to adopt other measures which were required in the prior art devices in order to avoid leakage of the hydraulic or pneumatic fluid. The costs for manufacturing and assembling the fan 1 can thus be significantly reduced.

The spheres 22 or other discrete bodies are not in principle an essential feature of the fan 1. For example, the spheres 22 could be replaced by a Bowden cable or another transmission device which allows linear motion to be transmitted from the actuator 20 to the control element 7.

However, the spheres 22 or other discrete bodies, if present, allow the linear motion to be reliably transmitted along a transmission path having any desired configuration, for example an output portion coaxial with the rotation axis X and an input portion extending at an angle to the rotation axis X. The curvature radius between the input portion and the output portion may be relatively small, even smaller than the curvature radius which might be obtained by using a Bowden cable. Furthermore, the spheres 22 are not particularly expensive, are easy to be assembled and require nearly no maintenance operations.

The fan 1 can also be quickly disassembled, if there is the need to do so. For example, the supporting device 3 and all its associated components, including the blades 2, can be easily separated from the pulley 18 and the engine of the vehicle simply by unscrewing the screws 19. In order to assemble and/or disassemble the supporting device 3, there are no springs that need to be preloaded, no sealing elements that must be properly positioned, and no other components that require to be handled carefully.

The control element 7 is easily kept in the correct position by the anti-rotation means which prevent the latter from rotating around the rotation axis X relative to the housing 13.

Furthermore, the spring 30 keeps the control element 7 in the correct position along the rotation axis X.

More in detail, the spring 30 has a plurality of functions. First of all, the spring 30 serves to displace the shaft 27 towards the inside of the tubular guide 23 when the actuator 20 is rotated in a direction such as to the cause the worm gear 21 to re-enter inside the casing thereof. The spring 30 thus allows the components of the adjusting device that are linearly displaceable to be moved backwards towards the actuator 20.

In addition, the spring 30 also keeps the teeth of the racks 5 constantly pushed against the teeth of the corresponding pinions 4. Any clearances between the racks 5 and the corresponding pinions 4 are thus substantially eliminated. Undesired displacements between the racks 5 and the pinions 4 are consequently avoided, which would wrongly position the blades 2, for example due to vibrations of the vehicle.

More in general, by exerting a linear force directed along the rotation axis X towards the support element 26, the spring 30 allows clearances between the components of the fan 1 along the rotation axis X to be substantially eliminated. This increases precision in controlling the pitch of the blades.

The actuator 20 can be such that, if no electric power is supplied thereto, the worm gear 21 remains in a stationary position without re-entering inside the casing of the actuator 20. This is due to the high transmission ratio between a toothed wheel of the actuator 20 and the worm gear 21.

Thus, after moving the blades 2 according to the desired orientation, the actuator 20 can be disconnected from electric power. The blades 2 remain in the reached position until the actuator 20 is again supplied with electric power and is driven to change the blades position. Energy can thus be saved during operation of the fan 1, which reduces the operation costs thereof.

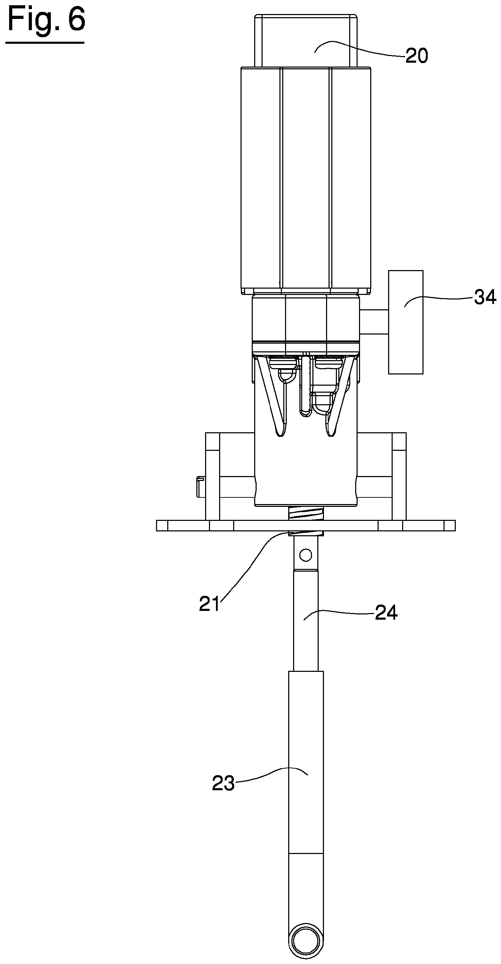

As shown in Figure 6, the actuator 20 can be provided with a manual adjusting device 34 comprising for example a knob, which can be used to act on the worm gear 21 in case of failure of the actuator 20.

If the actuator 20 fails, by manually acting on the manual adjusting device 34 (e.g. by manually turning the knob), the worm gear 21 can be brought into a position corresponding to a desired orientation of the blades 2 around the respective tilt axes Z. The correct flow rate of air sucked through the fan 1 can thus be ensured, according to the working conditions of the vehicle and hence according to the engine temperature.

The manual adjusting device 34 can also be used if the actuator 20 fails when the worm gear 21 is in its position of maximum protrusion out of the casing. In this case, the manual adjusting device 34 can be used to cause the worm gear 21 to re-enter before disassembling the fan 1, which can help for example in keeping the spheres 22 inside the tubular guide 23.

The fan 1 may be provided with a sensor, that is not shown, for detecting the position of the racks 5. By knowing the position of the racks 5, a feedback control on the engine temperature can be improved.

The sensor can be for example a Hall effect sensor, a linear position sensor, a proximity sensor or any other sensor which is capable of detecting, directly or indirectly, the position of the racks 5.

The sensor can be provided inside the actuator 20, in order to count the number of revolutions of the actuator 20. Since to each revolution of the actuator 20 a preset, small displacement of the racks 5 is associated, from the number of revolutions of the actuator 20 a precise indication of the position of the racks 5 relative to a reference position may be inferred.

Instead of being associated to the actuator 20, the sensor could be associated to other parts of the fan 1, for example to the control element 7 or to the housing 13.

The sensor, if present, needs to be calibrated, so that a control unit of the vehicle knows that a preset signal from the sensor corresponds to a well defined position of the racks 5 and hence to a preset angle of the blades 2.

In particular, the position detected by the sensor can be taken as a reference position, for example a zero position, when the pitch of the blades is at a maximum value, i.e. when the blades 2 form an angle of 45° around the corresponding tilt axes Z with respect to a plane perpendicular to the rotation axis X.

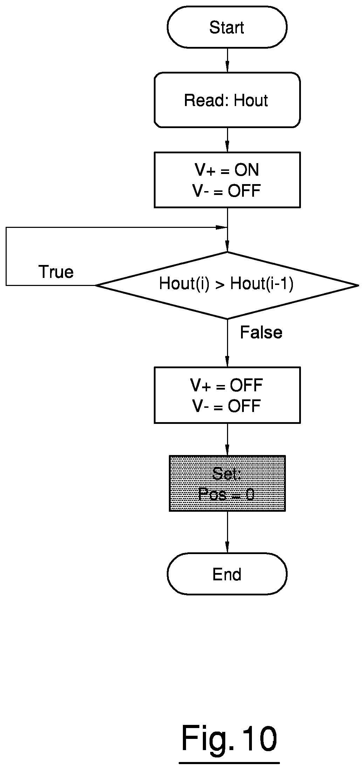

To this end, a calibration procedure of the kind shown in Figure 10 can be used.

When the vehicle is started up, a signal Hₒᵤₜ coming from the sensor is read.

The actuator 20 is then moved in a direction such as to displace the shaft 27 towards the right in Figure 3, i.e. to increase the pitch of the blades. To this end, the actuator 20 is supplied for example with a positive voltage V+.

The signal Hₒᵤₜ₍ᵢ₎ coming from the sensor at a preset moment i is then read and compared with the previous reading Hₒᵤₜ₍ᵢ₋₁₎ of the signal coming from the sensor.

If Hₒᵤₜ₍ᵢ₎ > Hₒᵤₜ₍ᵢ₋₁₎, which means that the pitch of the blades is increasing, then the previous action is repeated and the actuator 20 keeps to be supplied with a positive voltage V+ to continue to increase the pitch of the blades.

If the condition Hₒᵤₜ₍ᵢ₎ > Hₒᵤₜ₍ᵢ₋₁₎ is no more satisfied, then the control element 7 has reached an end stroke position and the pitch of the blades is at its maximum value.

At this point, the actuator 20 is stopped and the position of the blades 2 detected by the sensor is taken as a reference position.

The calibration procedure shown in Figure 10 can be carried out at various moments during operation of the vehicle.

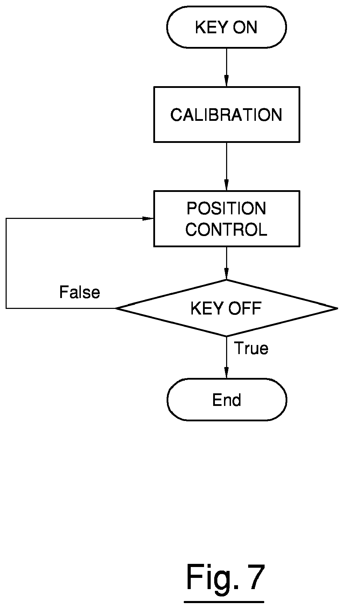

In a first embodiment, shown in Figure 7, the calibration procedure can be carried out each time the vehicle is started up.

In this embodiment, which is particularly simple, when the vehicle is started up (key on) the calibration procedure is carried out. Thereafter, while the vehicle is working, the position of the blades 2 detected by the sensor is regularly controlled, until the vehicle is switched off (key off).

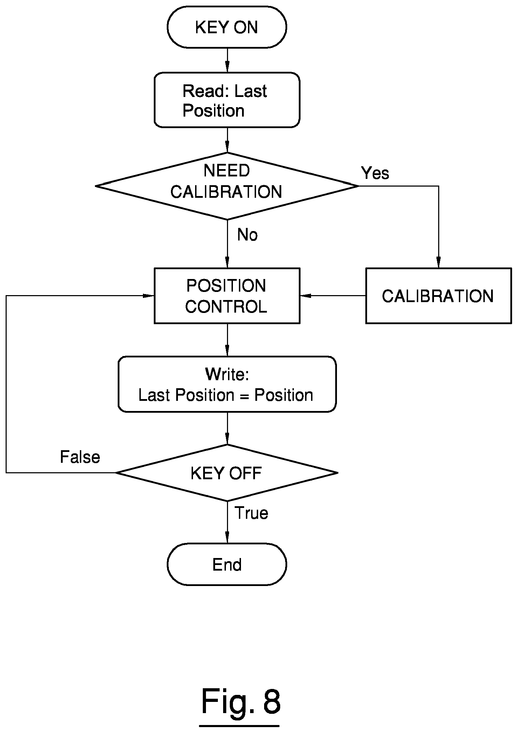

In a second embodiment, shown in Figure 8, the calibration procedure is carried out when the vehicle is started up only if it is needed.

To this end, when the vehicle is started up (key on), the control unit reads the last position of the blades 2 detected by the sensor and checks whether a new calibration procedure is needed, for example on the basis of threshold values stored in the control unit. If a new calibration procedure is needed, then the latter is carried out. If, on the contrary, no new calibration procedure is needed, the vehicle can start working and the position of the blades 2 will normally be controlled during operation. Before switching off the vehicle, the last position of the blades 2 detected by the sensor is saved as current position of the blades 2.

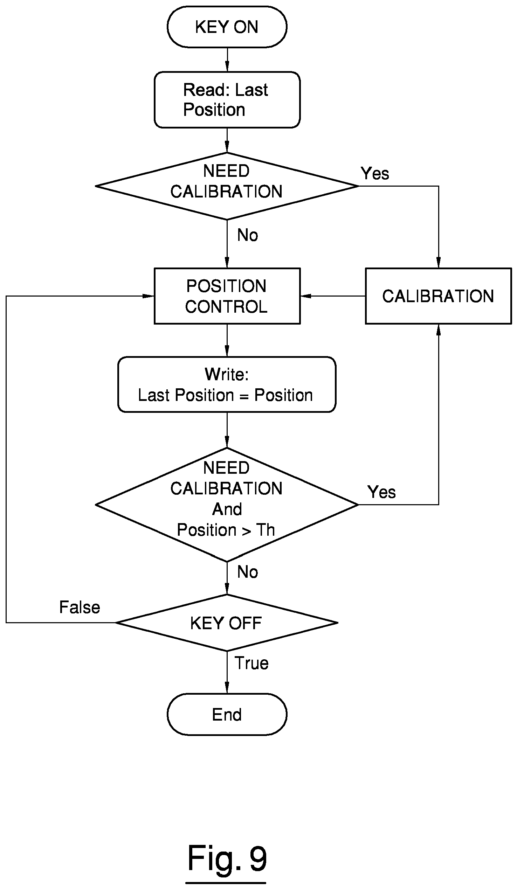

In a third embodiment, shown in Figure 9, the calibration procedure is carried out when the vehicle is started up only in case of need. Furthermore, during operation of the vehicle, the calibration procedure is carried out if two conditions are met:
- the first condition is that it is found that calibration is needed;
- the second condition is that the position detected by the sensor is greater than a threshold value.

In a particularly simple embodiment of the fan 1, the sensor described above could also be missing.

Warning means can be provided for warning the operator if something is going wrong with the fan 1, e.g. if the sensor detects that the actuator 20 is not capable of generating motion anymore. The warning means could comprise, for example, one or more warning lights or a warning message generated on a screen.

Finally, it is stressed that the coupling between the pinions 4 and the racks 5 can be used not only to adjust the pitch of the blades when the fan 1 is used as a suction fan, but also to position the blades 2 in such a manner that operation of the fan 1 is reversed, i.e. the fan 1 works as a blowing fan. In the latter way of operation, the fan 1 can be used to blow an air flow against the radiator or other components of the vehicle, particularly in order to clean them.

In the embodiment which has been described with reference to Figures 1 to 5, the transmission ratio between each mechanical driving element or rack 5 and the corresponding driven element or pinion 4 was constant. In an alternative embodiment, the transmission ratio between each mechanical driving element and the corresponding driven element may be variable, for example because the driven element comprises an elliptical toothed wheel.

## Claims

1. A variable pitch fan, comprising:
- a plurality of blades (2);
- a supporting device (3) for supporting the blades (2);
- a rotation device (18) for rotating the supporting device (3) around a rotation axis (X), so that the blades (2) rotate with the supporting device (3) to control an air flow;
- an adjusting device for adjusting a pitch of the blades by tilting each blade (2) around a respective tilt axis (Z), the adjusting device comprising a driven element (4) fixed relative to a blade (2);
the adjusting device further comprises a mechanical driving element (5) supported by the supporting device (3) so as to rotate with the supporting device (3), the mechanical driving element (5) being linearly displaceable relative to the supporting device (3) and being coupled to the driven element (4) so that a linear motion of the mechanical driving element (5) is converted into a rotary motion of the driven element (4) around the tilt axis (Z) wherein the mechanical driving element comprises a plurality of mechanical driving elements (5), each comprising a rack (5) and the driven element comprises a rotatable element associated to a blade (2), having at least a portion of toothed surface for engaging with the rack (5), particularly a pinion (4) and further comprising a transmission device for transmitting linear motion from an actuator (20) to the mechanical driving element (5) wherein the transmission device comprises a plurality of discrete bodies (22) contained inside a tubular guide (23), the racks being fixed relative to a common control, element (7), said control element (7) is housed inside a housing (13) of the supporting device (3), the blades (2) extending outside the housing (13), each blade (2) being connected to a driven element (4) by a stem passing through a hole (14) obtained in a wall of the housing (13), said variable pitch fan further comprising an elastic element (30), particularly a spring, interposed between the housing (13) and the control element (7), wherein the elastic element (30) is configured to push the control element (7) backwards when it is desired to invert a direction of the linear motion transmitted to the control element (7).

2. A fan according to claim 1, wherein the discrete bodies are spheres (22).

3. A fan according to claim 1 or 2, and further comprising a thrust element (24) connected to the actuator (20) and partially contained inside the tubular guide (23) for transmitting a thrust from the actuator (20) to the discrete bodies (22).

4. A fan according to any one of claims 1 to 3, and further comprising a shaft (27) partially contained inside the tubular guide (23) in a position interposed between the discrete bodies (22) and the mechanical driving element (5), so that the shaft (27) may transmit a force from the discrete bodies (22) to the mechanical driving element (5) or vice versa.

5. A fan according to any one of claims 1 to 4, wherein the tubular guide (23) extends along a transmission path interposed between the actuator (20) and the mechanical driving element (5), the transmission path having an output portion coaxial with the rotation axis (X) and an input portion extending at an angle relative to the rotation axis (X).

6. A fan according to claim 1, wherein the racks (5) protrude from a central body (8) of the control element (7), a space being defined between two consecutive racks (5), a driven element (4) being received in said space.

7. A fan according to claim 1 or 6 , wherein anti-rotation means are provided for preventing the control element (7) from rotating around the rotation axis (X) relative to the housing (13).

8. A fan according to claim 1 or 7, wherein the elastic element (30) is configured to push each rack (5) towards the corresponding driven element (4), so as to limit vibrations and keep each rack (5) in contact with the corresponding driven element (4).

9. A fan according to any preceding claim, and further comprising a balancing mass (10) associated to each blade (2) for balancing a centrifugal force acting on the blade (2).

## Patentansprüche

1. Verstellbares Gebläse mit:
- einer Mehrzahl von Flügeln (2);
- einer Trägervorrichtung (3) zum Tragen der Flügel (2);
- einer Drehvorrichtung (18) zum Drehen der Trägervorrichtung (3) um eine Drehachse (X), sodass sich die Flügel (2) mit der Trägervorrichtung (3) drehen, um einen Luftstrom zu regulieren;
- einer Einstellvorrichtung zum Einstellen eines Anstellwinkels der Flügel durch Schwenken jedes Flügels (2) um eine jeweilige Schwenkachse (Z), wobei die Einstellvorrichtung ein angetriebenes Element (4) umfasst, das relativ zu einem Flügel (2) festgelegt ist;
wobei die Einstellvorrichtung weiterhin ein mechanisches Antriebselement (5) umfasst, das durch die Trägervorrichtung (3) derart gelagert ist, dass es sich mit der Trägervorrichtung (3) dreht, wobei das mechanische Antriebselement (5) relativ zur Trägervorrichtung (3) linear verstellbar ist und derart mit dem angetriebenen Element (4) gekoppelt ist, dass eine Linearbewegung des mechanischen Antriebselements (5) in eine Drehbewegung des angetriebenen Elements (4) um die Schwenkachse (Z) umgewandelt wird, wobei das mechanische Antriebselement eine Mehrzahl von mechanischen Antriebselementen (5) umfasst, die jeweils eine Zahnstange (5) umfassen, und das angetriebene Element ein mit einem Flügel (2) verknüpftes drehbares Element umfasst, das zumindest einen Abschnitt mit einer gezahnten Oberfläche zum Eingreifen mit der Zahnstange (5), insbesondere ein Zahnrad, aufweist, und weiterhin eine Übertragungsvorrichtung zum Übertragen einer Linearbewegung von einem Antrieb (20) auf das mechanische Antriebselement (5) umfasst, wobei die Übertragungsvorrichtung eine Mehrzahl von separaten Körpern (22) umfasst, die in einer rohrförmigen Führung (23) aufgenommen sind, wobei die Zahnstangen relativ zu einem gemeinsamen Steuerelement (7) festgelegt sind, wobei das Steuerelement (7) in einem Gehäuse (13) der Trägervorrichtung (3) aufgenommen ist, wobei sich die Flügel (2) außerhalb des Gehäuses (13) erstrecken, wobei jeder Flügel (2) mit einem angetriebenen Element (4) mittels eines Schafts verbunden ist, der sich durch eine Öffnung (14) in einer Wand des Gehäuses (13) erstreckt, wobei das verstellbare Gebläse weiterhin ein elastisches Element (30), insbesondere eine Feder, umfasst, die zwischen das Gehäuse (13) und das Steuerelement (7) eingefügt ist, wobei das elastische Element (30) dazu eingerichtet ist, das Steuerelement (7) nach hinten zu drücken, wenn es gewünscht ist, eine Richtung der Linearbewegung, die auf das Steuerelement (7) übertragen wird, umzukehren.

2. Gebläse nach Anspruch 1, wobei die separaten Körper (22) Kugeln sind.

3. Gebläse nach Anspruch 1 oder 2, weiterhin umfassend ein Schubelement (24), das mit dem Antrieb (20) verbunden ist und zum Übertragen eines Drucks vom Antrieb (20) auf die separaten Körper (22) teilweise in der rohrförmigen Führung (23) aufgenommen ist.

4. Gebläse nach einem der Ansprüche 1 bis 3, weiterhin umfassend eine Welle (27), die in einer Position, in der sie zwischen die separaten Körper (22) und dem mechanischen Antriebselement (5) eingefügt ist, teilweise in der rohrförmigen Führung (23) aufgenommen ist, sodass die Welle (27) eine Kraft von den separaten Körpern (22) auf das mechanische Antriebselement (5) übertragen kann oder umgekehrt.

5. Gebläse nach einem der Ansprüche 1 bis 4, wobei sich die rohrförmige Führung (23) entlang eines Übertragungswegs erstreckt, der zwischen dem Antrieb (20) und dem mechanischen Antriebselement (5) angeordnet ist, wobei der Übertragungsweg einen Ausgangsabschnitt koaxial zur Drehachse (X) und einen Eingangsabschnitt in einem Winkel relativ zur Drehachse (X) aufweist.

6. Gebläse nach Anspruch 1, wobei die Zahnstangen (5) von einem zentralen Körper (8) des Steuerelements (7) hervorragen, wobei ein Zwischenraum zwischen zwei aufeinanderfolgenden Zahnstangen (5) definiert ist, wobei ein angetriebenes Element (4) in dem Zwischenraum aufgenommen ist.

7. Gebläse nach Anspruch 1 oder 6, wobei Anti-Drehmittel vorgesehen sind, um zu verhindern, dass sich das Steuerelement (7) relativ zum Gehäuse (13) um die Drehachse (X) dreht.

8. Gebläse nach Anspruch 1 oder 7, wobei das elastische Element (30) dazu eingerichtet ist, jede Zahnstange (5) in Richtung des entsprechenden angetriebenen Elements (4) zu drücken, um Vibrationen zu begrenzen und jede Zahnstange (5) in Kontakt mit dem entsprechenden angetriebenen Element (4) zu halten.

9. Gebläse nach einem der vorangehenden Ansprüche, weiterhin umfassend eine Ausgleichsmasse (10) zugehörig zu jedem Flügel (2) zum Ausgleichen einer Fliehkraft, die auf den Flügel (2) wirkt.

## Revendications

1. Ventilateur à pas variable, comprenant :
- une pluralité de pales (2) ;
- un dispositif de support (3) destiné à supporter les pales (2) ;
- un dispositif de rotation (18) pour faire tourner le dispositif de support (3) autour d'un axe de rotation (X), de sorte que les pales (2) tournent avec le dispositif de support (3) pour commander un flux d'air ;
- un dispositif de réglage pour régler un pas des pales en inclinant chaque pale (2) autour d'un axe d'inclinaison (Z) respectif, le dispositif de réglage comprenant un élément entraîné (4) fixe par rapport à une pale (2) ;
le dispositif de réglage comprend en outre un élément d'entraînement mécanique (5) supporté par le dispositif de support (3) de façon à tourner avec le dispositif de support (3), l'élément d'entraînement mécanique (5) pouvant être déplacé linéairement par rapport au dispositif de support (3) et étant couplé à l'élément entraîné (4) de sorte qu'un mouvement linéaire de l'élément d'entraînement mécanique (5) soit converti en un mouvement rotatif de l'élément entraîné (4) autour de l'axe d'inclinaison (Z) dans lequel l'élément d'entraînement mécanique comprend une pluralité d'éléments d'entraînement mécanique (5), chacun comprenant une crémaillère (5) et l'élément entraîné comprend un élément rotatif associé à une pale (2), ayant au moins une partie d'une surface dentée pour être mise en prise avec la crémaillère (5), en particulier un pignon (4) et comprenant en outre un équipement de transmission pour transmettre le mouvement linéaire d'un actionneur (20) à l'élément d'entraînement mécanique (5) dans lequel l'équipement de transmission comprend une pluralité de corps discrets (22) contenus dans un guidage tubulaire (23), les crémaillères étant fixes par rapport à un élément de commande commun (7), ledit élément de commande (7) se situe à l'intérieur d'un boîtier (13) du dispositif de support (3), les pales (2) s'étendant à l'extérieur du boîtier (13), chaque pale (2) étant connectée à un élément entraîné (4) par une tige traversant un trou (14) obtenu dans une paroi du boîtier (13), ledit ventilateur à pas variable comprenant en outre un élément élastique (30), en particulier un ressort, interposé entre le boîtier (13) et l'élément de commande (7), dans lequel l'élément élastique (30) est configuré pour pousser l'élément de commande (7) vers l'arrière lorsqu'il est censé inverser une direction du mouvement linéaire transmis à l'élément de commande (7).

2. Ventilateur selon la revendication 1, dans lequel les corps discrets sont des sphères (22).

3. Ventilateur selon les revendications 1 ou 2, et comprenant en outre un élément de poussée (24) relié à l'actionneur (20) et partiellement contenu dans le guidage tubulaire (23) pour transmettre une poussée de l'actionneur (20) aux corps discrets (22).

4. Ventilateur selon l'une quelconque des revendications 1 à 3, et comprenant en outre un arbre (27) partiellement contenu dans le guidage tubulaire (23) dans une position interposée entre les corps discrets (22) et l'élément d'entraînement mécanique (5), de sorte que l'arbre (27) puisse transmettre une force des corps discrets (22) à l'élément d'entraînement mécanique (5) ou inversement.

5. Ventilateur selon l'une quelconque des revendications 1 à 4, dans lequel le guidage tubulaire (23) s'étend le long d'une voie de transmission interposée entre l'actionneur (20) et l'élément d'entraînement mécanique (5), la voie de transmission ayant une partie de sortie coaxiale par rapport à l'axe de rotation (X) et une partie d'entrée s'étendant selon un angle par rapport à l'axe de rotation (X).

6. Ventilateur selon la revendication 1, dans lequel les crémaillères (5) font saillie depuis un corps central (8) de l'élément de commande (7), un espace étant défini entre deux crémaillères consécutives (5), un élément entraîné (4) étant inséré dans ledit espace.

7. Ventilateur selon la revendication 1 ou 6, dans lequel des moyens d'anti-rotation sont prévus pour prévenir la rotation de l'élément de commande (7) autour de l'axe de rotation (X) par rapport au boîtier (13).

8. Ventilateur selon la revendication 1 ou 7, dans lequel l'élément élastique (30) est configuré pour pousser chaque crémaillère (5) vers l'élément entraîné (4) correspondant, de sorte que les vibrations soient limitées et que chaque crémaillère (5) reste en contact avec l'élément entraîné (4) correspondant.

9. Ventilateur selon l'une quelconque des revendications précédentes, et comprenant en outre une masse d'équilibrage (10) associée à chaque pale (2) pour équilibrer une force centrifuge agissant sur la pale (2).
